# EUROPEAN PATENT APPLICATION

(11) **EP 4 516 486 A1**
(43) Date of publication of application: **05.03.2025**
(21) Application number: 23815645.9
(22) Date of filing: 26.04.2023
(51) Int. Cl.: B29C 64/314, B29C 64/118, B33Y 10/00, B33Y 70/00

(54) **FILAMENT AND SHAPED-OBJECT MANUFACTURING METHOD**

(30) Priority: 31.05.2022 JP 2022088614
(71) Applicant: KABUSHIKI KAISHA KOBE SEIKO SHO (KOBE STEEL, LTD.), Hyogo 651-8585 (JP)
(72) Inventor: TAKENAKA, Makoto, Kobe-shi, Hyogo 651-2271 (JP); ANDO, Taka, Kobe-shi, Hyogo 651-2271 (JP)
(74) Representative: TBK
(86) International application number: PCT/JP2023/016548
(87) International publication number: WO 2023/233884

(57) **Abstract**

Provided are a filament having good flexibility, high tensile strength, and high bending rigidity, and a manufactured object manufacturing method which can manufacture a manufactured object having excellent strength properties by using the filament. In the filament used as a manufacturing raw material for a 3D printer, a fiber bundle including a continuous reinforcing fiber is impregnated with a matrix resin, the fiber bundle includes a first group of fiber bundles and a second group of fiber bundles, and a twisting angle of the first group of fiber bundles is smaller than a twisting angle of the second group of fiber bundles.

## Description

### TECHNICAL FIELD

The present invention relates to a filament and a manufactured object manufacturing method.

### BACKGROUND ART

In order to improve the mechanical strength of a manufactured object, a use of manufacturing fiber reinforced plastics (FRP) with a fused deposition modeling (FDM) 3D printer using a continuous fiber reinforced resin strand has been expanded. Such a 3D printer is used in a manufacturing step for jigs and parts, such as bicycle frames.

Patent Literature 1 discloses a filament (strand) used in a fused deposition modeling 3D printer, including a base material containing a thermoplastic resin as a main component; and at least one fiber or fiber bundle impregnated in the base material and extending in an axial direction, in which twisting is applied to the fiber or the fiber bundle along the axial direction.

### CITATION LIST

### PATENT LITERATURE

Patent Literature 1: JP2021-123026A

### SUMMARY OF INVENTION

### TECHNICAL PROBLEM

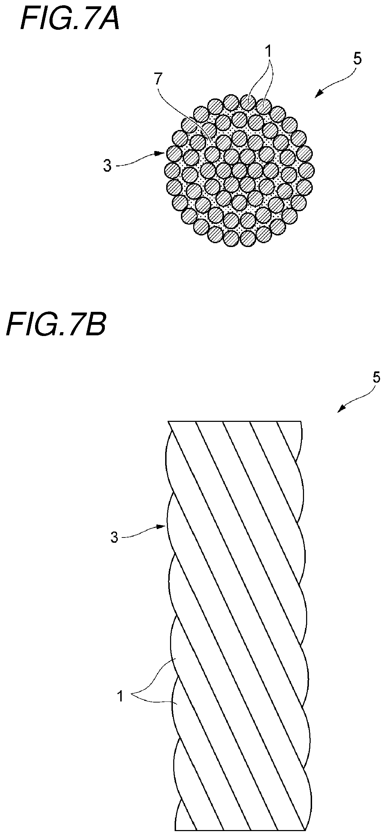

A filament 5 shown in FIG. 7A and FIG. 7B has a fiber bundle 3 in which twisting is applied to a plurality of fibers 1 in an orientation angle inclined along an axial direction. According to the filament 5, good flexibility of the filament 5 can be obtained when a manufactured object is manufactured by the fused deposition modeling. However, in the case of the filament 5, the twisting is applied to the entire fiber bundle 3, and thus tensile strength and bending rigidity in the axial direction may be reduced.

When the manufactured object is manufactured by the fused deposition modeling, a thermoplastic resin of the filament 5 is melted from a head unit having a heating mechanism, and the fiber bundle 3 and the melted resin are ejected from a nozzle attached to the head unit, and are laminated on a table or a base layer including a printing path that has already been ejected. In this case, if the entire fiber bundle 3 of the filament 5 is twisted, the fiber bundle 3 ejected from the nozzle is difficult to spread, the fibers 1 are insufficiently fused to the table or the base, and the fibers 1 are likely to be unevenly distributed during manufacturing. Therefore, strength of the manufactured object manufactured may be reduced or varied.

Accordingly, an object of the present invention is to provide a filament having good flexibility, high tensile strength, and high bending rigidity, and to provide a manufactured object manufacturing method which can manufacture a manufactured object having excellent strength properties by using the filament.

### SOLUTION TO PROBLEM

The present invention includes the following configurations.
(1) A filament used as a manufacturing raw material for a 3D printer, in which
   a fiber bundle including a continuous reinforcing fiber is impregnated with a matrix resin,
   the filament includes a first group of fiber bundles and a second group of fiber bundles, and
   a twisting angle of the first group of fiber bundles is smaller than a twisting angle of the second group of fiber bundles.
(2) A manufactured object manufacturing method, including:
   thermally melting the filament according to (1) and ejecting a thermally melted manufacturing material to additively manufacture a manufactured object.

### ADVANTAGEOUS EFFECTS OF INVENTION

According to the present invention, a filament having good flexibility, high tensile strength, and high bending rigidity can be obtained. By manufacturing a manufactured object using the filament, the manufactured object having excellent strength properties can be obtained.

### BRIEF DESCRIPTION OF DRAWINGS

[FIG. 1] FIG. 1 is a schematic configuration diagram showing an additive manufacturing apparatus using FDM.
[FIG. 2A] FIG. 2A is a cross-sectional view in a radial direction perpendicular to an axial direction of the filament.
[FIG. 2B] FIG. 2B is a side view of the filament.
[FIG. 3A] FIG. 3A is a cross-sectional view in a radial direction of a filament according to Modification 1.
[FIG. 3B] FIG. 3B is a side view of the filament according to Modification 1.
[FIG. 4A] FIG. 4A is a cross-sectional view in a radial direction of a filament according to Modification 2.
[FIG. 4B] FIG. 4B is a side view of the filament according to Modification 2.
[FIG. 5] FIG. 5 is a cross-sectional view in a radial direction of a filament according to Modification 3.
[FIG. 6] FIG. 6 is a schematic perspective view of a filament manufacturing apparatus.
[FIG. 7A] FIG. 7A is a cross-sectional view in a radial direction of a filament in the related art.
[FIG. 7B] FIG. 7B is a side view of the filament in the related art.

### DESCRIPTION OF EMBODIMENTS

Hereinafter, embodiments according to the present invention will be described in detail with reference to the drawings.

First, a configuration of a 3D printer will be briefly described. An additive manufacturing apparatus shown here is an example of the 3D printer, and may be another configuration.

### <Configuration of Additive Manufacturing Apparatus>

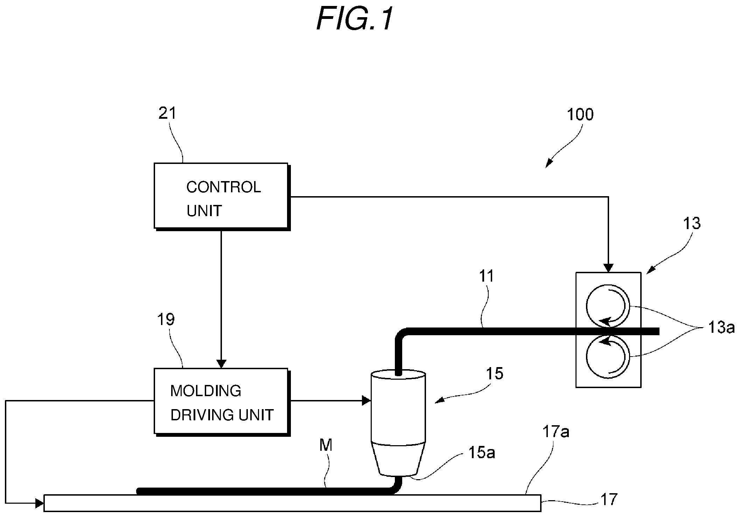

FIG. 1 is a schematic configuration diagram showing an additive manufacturing apparatus 100 using FDM.

The additive manufacturing apparatus 100 includes a filament feeding unit 13 that feeds a fiber-reinforced resin filament (hereinafter, also referred to as a filament) 11, a head unit 15, a table 17, a molding driving unit 19, and a control unit 21.

The filament feeding unit 13 includes a pair of driving rollers 13a that sandwich the filament 11, and a driving unit (not shown) such as a motor that rotationally drives at least one of the driving rollers 13a.

The head unit 15 includes a heating unit (not shown) that thermally melts the fed filament 11, and a nozzle 15a that ejects a manufacturing material melted by the heating unit. Although not shown, a cutting unit such as a cutter or a laser cutting device that cuts reinforcing fibers included in the filament 11 may be provided.

The table 17 is disposed to face the nozzle 15a of the head unit 15, and has a manufacturing surface 17a on which a manufactured object is laminated.

The molding driving unit 19 relatively moves the head unit 15 and the table 17 to form a manufacturing material ejected from the nozzle 15a of the head unit 15 along a desired path. For example, the molding driving unit 19 may include a biaxial driving mechanism that moves the head unit 15 within a plane of the manufacturing surface 17a of the table 17, and a raising and lowering mechanism that adjusts a laminating height by raising and lowering the table 17.

The control unit 21 has a function of controlling the feeding of the filament 11 by the filament feeding unit 13 and the relative movement of the head unit 15 by the molding driving unit 19, and a function of collectively controlling other units. The control unit 21 receives a program for controlling units including the filament feeding unit 13 and the molding driving unit 19, and executes the program to additively manufacture a manufactured object having a desired shape.

### <Method for Manufacturing Manufactured Object>

In the additive manufacturing apparatus 100 having the present configuration, the control unit 21 feeds the filament 11 to the head unit 15, and the fed filament 11 is thermally melted by the head unit 15. Then, a manufacturing step of ejecting the manufacturing material obtained by melting the filament 11 from the nozzle 15a of the head unit 15 while moving the head unit 15 and the table 17 relative to each other is performed. Accordingly, a manufactured object having a desired shape is formed on the table 17.

### <Configuration of Filament>

Next, a configuration of the filament 11 will be described.

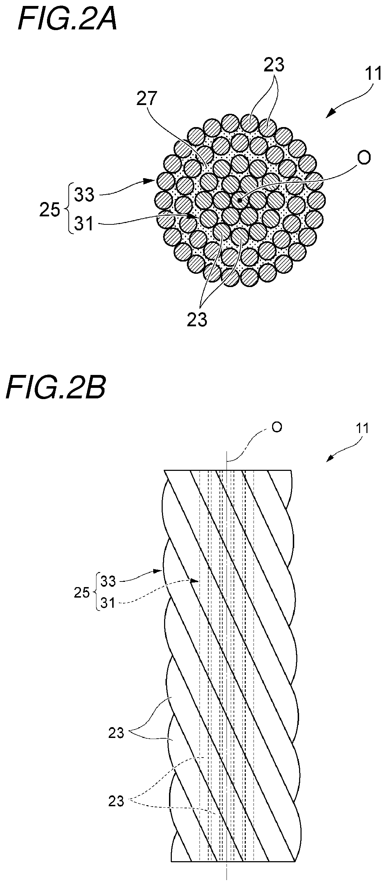

FIG. 2A is a cross-sectional view in a radial direction perpendicular to an axial direction of the filament 11. FIG. 2B is a side view of the filament 11.

As shown in FIG. 2A and FIG. 2B, the filament 11 is a linear resin material used as a manufacturing raw material for a 3D printer such as the additive manufacturing apparatus 100 described above, and a fiber bundle 25 including continuous reinforcing fibers 23 is impregnated with a matrix resin (hereinafter, also simply referred to as a resin) 27 including a thermoplastic resin. Note that the matrix resin 27 is not limited to the thermoplastic resin, and may be, for example, another resin material such as a thermosetting resin.

The filament 11 includes a first group of fiber bundles 31 and a second group of fiber bundles 33 as the fiber bundle 25. The first group of fiber bundles 31 is disposed along a filament central axis O, and the second group of fiber bundles 33 is disposed around the first group of fiber bundles 31. The second group of fiber bundles 33 is disposed at a radially outer side of the first group of fiber bundles 31, and is applied with twisting around the first group of fiber bundles 31. The first group of fiber bundles 31 disposed along the filament central axis O is arranged parallel to the filament central axis O. The reinforcing fibers 23 constituting the first group of fiber bundles 31 are aligned in such a way that an orientation direction of the reinforcing fibers 23 is parallel to the filament central axis O.

Note that twisting around the filament central axis O may be applied to the first group of fiber bundles 31. In this case, a twisting angle of the first group of fiber bundles 31 is set smaller than a twisting angle of the second group of fiber bundles 33.

As the reinforcing fibers 23 of the fiber bundle 25 constituting the filament 11, organic fibers such as a polyethylene fiber, an aramid fiber, and a Xyron fiber, and inorganic fibers such as a boron fiber, a glass fiber, a carbon fiber, a metal fiber, and a rock fiber may be used. As the reinforcing fiber, a fiber that has been subjected to a surface treatment may be used in order to improve adhesion strength between the resin and the fiber.

As the thermoplastic resin which is a main component of the matrix resin 27 of the filament 11, polyolefin-based resins such as polypropylene or polyethylene, acrylonitrile-butadiene-styrene resins, polystyrene resins, polyester-based resins such as polyethylene terephthalate, polybutylene terephthalate, or polylactic acid, polyamide-based resins, aromatic polyamide-based resins, polyetherimide, polyarylimide, polyarylate, polyether ether ketone, polyaryletherketone, polybenzimidazole, polyethersulfone, polysulfone, polyvinylidene fluoride resins, liquid crystal polymers, polycarbonate resins, polyacetal, polyphenylene sulfide and the like may be used.

These thermoplastic resins may be used alone, and a thermoplastic resin in which a plurality of these resins is blended may be used to improve heat resistance, heat distortion temperature, heat aging resistance, tensile properties, bending properties, creep properties, compression properties, fatigue properties, impact properties, and sliding properties of the thermoplastic resin. Examples of the thermoplastic resin include polyetheretherketone resin (PEEK)/polytetrafluoroethylene (PTFE) and PEEK/polybenzimidazole (PBI). The thermoplastic resin may be obtained by adding short fibers such as a carbon fiber and a glass fiber, talc, or the like to a resin.

By adding phenolic antioxidants, thioether-based antioxidants, or phosphite-based antioxidants, benzotriazole-based ultraviolet absorbers or triazine-based ultraviolet absorbers, hydrazide-based metal deactivating agents or amide-based metal deactivating agents, or the like to the thermoplastic resin, durability of the manufactured object may be improved.

By adding a phthalic acid-based plasticizer or polyester-based plasticizer to the thermoplastic resin, the flexibility may be improved, and the manufacturing accuracy during manufacturing and the flexibility of the manufactured object may be improved.

By adding a halogen-based flame retardant, phosphate ester-based flame retardant, inorganic flame retardant, or intumescent flame retardant to the thermoplastic resin, the flame retardancy of the manufactured object may be improved.

By adding a phosphate ester metal salt-based core material or sorbitol-based core material to the thermoplastic resin, the thermal expansion during the manufacturing may be controlled, and the manufacturing accuracy may be improved.

By adding a non-ionic-based permanent antistatic agent, anionic-based permanent antistatic agent, and cationic-based permanent antistatic agent to the thermoplastic resin, the antistatic property of the manufactured object can be improved.

By adding a hydrocarbon-based lubricant or metal soap-based lubricant to the thermoplastic resin to improve the slidability of the continuous fiber-reinforced filament, the filament can be smoothly fed during the manufacturing.

In the filament used for a 3D printer, the flexibility can be improved by applying the twisting to the fiber bundle, but since an orientation angle of the reinforcing fibers of the fiber bundle is inclined with respect to the axial direction, there is a risk of a decrease in the tensile strength and the bending rigidity in the axial direction. If the entire fiber bundle is twisted, the fiber bundle ejected from the nozzle is difficult to spread when manufacturing a manufactured object by the fused deposition modeling. Therefore, the fusing to a base or the table 17 shown in FIG. 1 may be insufficient, and the reinforcing fibers may be unevenly distributed during the manufacturing. The fiber bundle is difficult to spread, so that a gap is likely to occur between adjacent filaments when viewed in a plan view. Therefore, strength of the manufactured object manufactured may be reduced or varied.

Accordingly, the filament 11 having the present configuration has the first group of fiber bundles 31 and the second group of fiber bundles 33, as the fiber bundle 25 including the continuous reinforcing fibers 23, and the twisting angle of the first group of fiber bundles 31 is set smaller than the twisting angle of the second group of fiber bundles 33. Accordingly, the tensile strength and the bending rigidity are improved by the first group of fiber bundles 31 while the good flexibility is achieved due to the second group of fiber bundles 33.

When the manufactured object is manufactured using the filament 11, the second group of fiber bundles 33 is twisted at a twisting angle larger than that of the first group of fiber bundles 31, and thus the flexibility of the second group of fiber bundles 33 is improved. Therefore, when printing a curvature unit, the filament 11 easily follows a curvature, and manufacturing accuracy is improved.

In the first group of fiber bundles 31, the fiber bundle 25 smoothly spreads when being ejected from the nozzle, and the reinforcing fibers 23 are uniformly distributed during the manufacturing, and thus the fibers are well fused to the table or the base. Furthermore, since the fiber bundle 25 easily spreads, a gap is less likely to occur between the adjacent filaments 11 in a plan view, and the filaments are easily gathered.

A synergistic effect of the first group of fiber bundles 31 and the second group of fiber bundles 33 described above makes it easy to obtain a high-strength manufactured object with reduced variation in strength.

In particular, when the orientation direction of the reinforcing fibers 23 of the first group of fiber bundles 31 is aligned parallel to the axial direction of the filament, an increase in the tensile strength and the bending rigidity due to the first group of fiber bundles 31 becomes significant.

Next, modifications of the filament 11 described above will be described.

### (Modification 1)

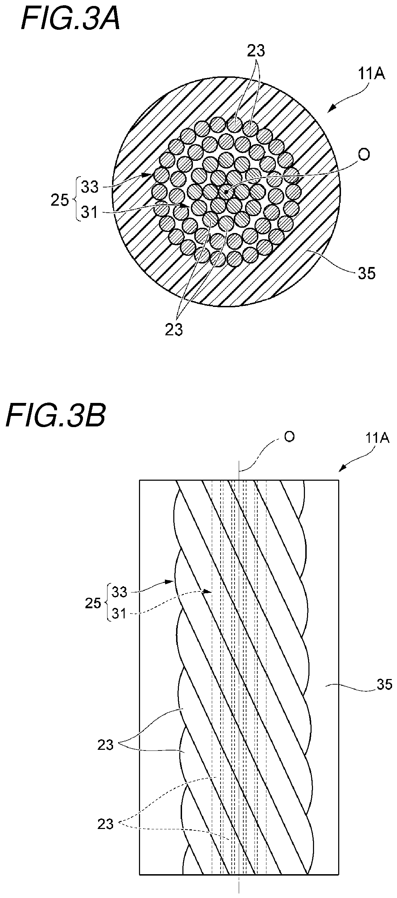

FIG. 3A is a cross-sectional view in a radial direction of a filament 11A according to Modification 1. FIG. 3B is a side view of the filament 11A according to Modification 1.

As shown in FIG. 3A and FIG. 3B, in the filament 11A according to Modification 1, the first group of fiber bundles 31 disposed along the filament central axis O is also arranged parallel to the filament central axis O. The twisting around the first group of fiber bundles 31 is applied to the second group of fiber bundles 33 disposed at the radially outer side of the first group of fiber bundles 31. The reinforcing fibers 23 constituting the first group of fiber bundles 31 are aligned in such a way that the orientation direction of the reinforcing fibers 23 is parallel to the filament central axis O. In the filament 11A according to Modification 1, an outer circumference (radially outer side) of the second group of fiber bundles 33 is covered with a resin 35. The resin 35 is preferably the same material as the matrix resin 27 described above. Regions of the first group of fiber bundles 31 and the second group of fiber bundles 33 may be impregnated with the resin 35 or may be impregnated with the matrix resin 27 described above. In the present configuration, the twisting around the filament central axis O may also be applied to the first group of fiber bundles 31. In this case, the twisting angle of the first group of fiber bundles 31 is set smaller than the twisting angle of the second group of fiber bundles 33.

According to the filament 11A, since the outer circumference of the second group of fiber bundles 33 is covered with the resin 35, the tensile strength and the bending rigidity are improved by the first group of fiber bundles 31 while the good flexibility is achieved. The reinforcing fibers 23 of the second group of fiber bundles 33 provided on the outer side of the first group of fiber bundles 31 can be protected by the resin 35.

### (Modification 2)

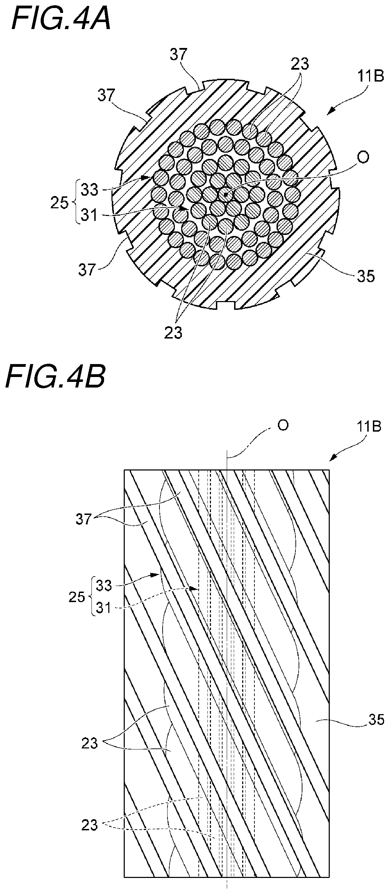

FIG. 4A is a cross-sectional view in a radial direction of a filament 11B according to Modification 2. FIG. 4B is a side view of the filament 11B according to Modification 2.

As shown in FIG. 4A and FIG. 4B, in a case of the filament 11B according to Modification 2, similar to the filament 11A according to Modification 1, the outer circumference (radially outer side) of the second group of fiber bundles 33 is also covered with the resin 35. Furthermore, grooves 37 are formed on an outer circumferential surface of the filament 11B. The plurality of grooves 37 are formed at equal intervals in a circumferential direction of the filament 11B, and are formed in a spiral shape along an axial direction of the filament. The groove 37 described above may be replaced with a ridge formed on the outer circumferential surface of the filament 11B and protruding toward the radially outer side.

According to the filament 11B according to Modification 2, the grooves 37 or the ridges can increase a surface area of the outer circumferential surface and improve the flexibility. The grooves 37 or the ridges described above are not limited to a spiral shape, and may be linear along the axial direction of the filament 11B. A configuration may be employed in which a plurality of annular grooves or annular protrusions formed continuously in the circumferential direction of the filament 11B are provided along the axial direction of the filament 11B. The grooves or the ridges described above may be disposed in combination. That is, at least spiral or linear irregularities along the axial direction of the filament, or a plurality of annular irregularities disposed along the axial direction of the filament are formed on the outer circumferential surface of the filament 11B.

### (Modification 3)

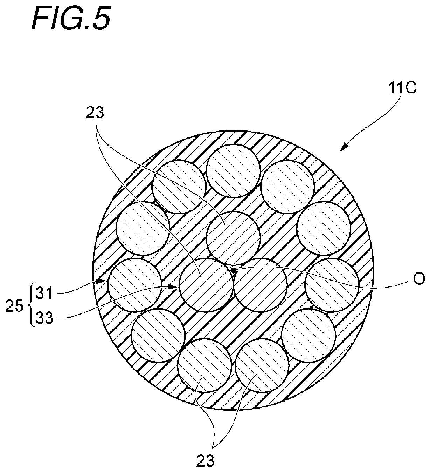

FIG. 5 is a cross-sectional view in a radial direction of a filament 11C according to Modification 3.

As shown in FIG. 5, in the filament 11C according to Modification 3, the first group of fiber bundles 31 and the second group of fiber bundles 33 are disposed in the opposite order to that in the filament 11 in a cross-sectional view. That is, the second group of fiber bundles 33 is disposed along the filament central axis O, and the first group of fiber bundles 31 is disposed around the second group of fiber bundles 33.

The twisting with respect to the filament central axis O is applied to the second group of fiber bundles 33 disposed along the filament central axis O, and the first group of fiber bundles 31 disposed around the second group of fiber bundles 33 is arranged parallel to the filament central axis O. The reinforcing fibers 23 constituting the first group of fiber bundles 31 are aligned in such a way that the orientation direction of the reinforcing fibers 23 is parallel to the filament central axis O.

According to the filament 11C, the twisting is applied to the second group of fiber bundles 33 disposed at a radially inner side of the first group of fiber bundles 31. According to the present configuration, the tensile strength and the bending rigidity are also improved by the first group of fiber bundles 31 while the good flexibility is achieved.

Note that in Modification 3, the twisting around the filament central axis O may also be applied to the first group of fiber bundles 31. In this case, the twisting angle of the first group of fiber bundles 31 is set smaller than the twisting angle of the second group of fiber bundles 33.

### <Method for Manufacturing Filament>

Next, a method for manufacturing the filament described above will be described. A filament manufacturing apparatus shown here is an example, and is not limited thereto.

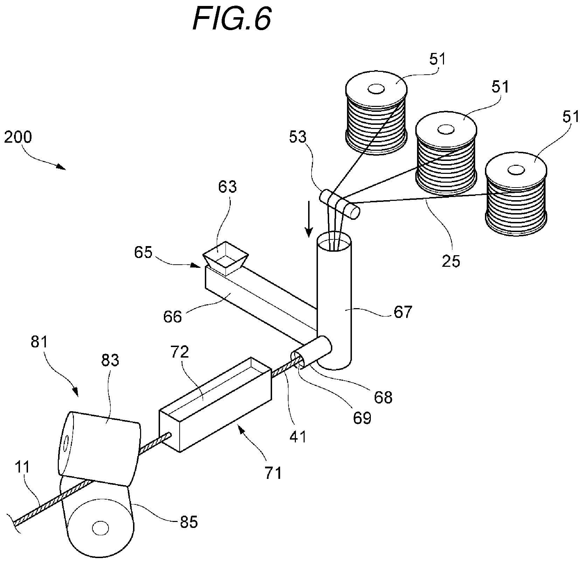

FIG. 6 is a schematic configuration diagram of a filament manufacturing apparatus 200.

The filament manufacturing apparatus 200 includes a plurality of fiber material supply units 51 that feed the fiber bundles 25 each wound in a coil shape at a predetermined speed, a kneading extruder 65 that kneads and melts a resin, and a resin bath unit 67 that impregnates the fiber bundle 25 fed from the fiber material supply units 51 with the resin plasticized by the kneading extruder 65.

The filament manufacturing apparatus 200 includes a cooling unit 71 disposed at a downstream side of the resin bath unit 67, and a twisting unit 81 disposed at a downstream side of the cooling unit 71. A composite (impregnated fiber material) 41 in which the fiber bundle 25 is impregnated with the resin is fed from the resin bath unit 67. The cooling unit 71 cools the composite 41 fed from the resin bath unit 67. The twisting unit 81 mainly applies the twisting around an axial center to the fiber bundle 25 before cooling.

The kneading extruder 65 is rotatably provided with a screw shaft (not shown) including a kneading blade in a chamber 66 having a cavity therein, and melts and plasticizes the resin fed from a hopper 63.

The resin bath unit 67 is formed in a cylindrical shape with a cylinder axial direction extending up and down, and the resin 35 plasticized by the kneading extruder 65 is supplied and stored inside the cylinder. An upper end portion of the resin bath unit 67 is opened, and the fiber bundle 25 guided by a guide roller 53 is drawn into the resin stored in the resin bath unit 67 from the upper end opening.

A plurality of impregnation rolls (not shown) which are rotatably held with axes thereof oriented in a horizontal direction are provided inside the resin bath unit 67. The fiber bundle 25 introduced from the upper end opening of the resin bath unit 67 is sequentially laid over the impregnation rolls and sent to an outlet portion 68.

The outlet portion 68 at a lower end portion of the resin bath unit 67 is provided with a die 69 for shaping an outer circumference of the composite 41 of the resin and the fiber bundle 25 when the composite 41 is drawn out to the outside. Depending on an opening shape of the die 69, it is possible to form irregularities such as the grooves 37 and the ridges on the outer circumferential surface of the filament.

The cooling unit 71 is a water tank elongated in a direction in which the composite 41 is drawn out from the resin bath unit 67, and cooling water 72 is stored in the tank. In the cooling unit 71, the resin impregnated in the fiber bundle 25 in the composite 41 is cooled and hardened in the cooling water 72.

The twisting unit 81 shown here is disposed at the downstream side of the cooling unit 71 and has a pair of upper take-up roll 83 and lower take-up roll 85 with outer circumferential surfaces thereof brought into contact with each other. Such a twisting unit 81 can employ various mechanisms. For example, although not shown, various mechanisms such as a mechanism that rotates a bobbin for winding the filament 11 around an axis of the filament 11 can be employed.

The take-up roller 83 and the take-up roller 85 have a function of drawing the fiber bundle 25 from the fiber material supply units 51 to the resin bath unit 67, and further drawing out the composite 41 from the resin bath unit 67 to the cooling unit 71 and the twisting unit 81. A winding unit (not shown) is separately provided at a downstream side of the twisting unit 81 to wind the obtained filament 11 on a bobbin or the like.

A manufacturing procedure of the filament 11 using the filament manufacturing apparatus 200 described above is as follows.

### (Impregnation Step)

An impregnation step is performed by the resin bath unit 67 of the filament manufacturing apparatus 200. Specifically, the resin supplied from the hopper 63 is kneaded in the kneading extruder 65, and the resin in a molten state is stored in the resin bath unit 67. The fiber bundle 25 is supplied to the resin bath unit 67 from the fiber material supply units 51. In the resin bath unit 67, the fiber bundle 25 is impregnated with the resin in the molten state, and passes through the die 69 disposed at the outlet portion 68 to adjust an amount of impregnation. The impregnation results in a state in which the matrix resin is present in the gap within each fiber bundle 25, present around each fiber bundle 25, and present between the fiber bundles 25. The composite 41 of the matrix resin and the fiber bundle 25 obtained in this way is cooled in the cooling unit 71.

### (Twisting Step)

In a twisting step, the twisting is applied to the fiber bundle 25 impregnated with the resin in the resin bath unit 67 by the twisting unit 81. Specifically, the composite 41 that passes through the cooling unit 71 passes through nips of the take-up roll 83 and the take-up roll 85 of the twisting unit 81 while these rolls rotate. Accordingly, the twisting is applied to the fiber bundle 25. In the present example, the twisting is applied to the second group of fiber bundles 33 on the outer circumference side of the first group of fiber bundles 31 along the filament central axis O. The number of times of twisting and the twisting angle can be adjusted by adjusting an inclination angle with respect to a take-up direction of the take-up roll 83 and the take-up roll 85 described above. The closer to the filament central axis O, the smaller the twisting angle can be.

In this way, the filament 11 can be manufactured in which the fiber bundle 25 is impregnated with the matrix resin containing the thermoplastic resin, the first group of fiber bundles 31 is provided along the filament central axis O, and the second group of fiber bundles 33 to which the twisting is applied is provided on the outer circumference of the first group of fiber bundles 31. When manufacturing the filament 11, the twisting may be applied to both the first group of fiber bundles 31 and the second group of fiber bundles 33, and in this case, the twisting angle of the first group of fiber bundles 31 is set smaller than the twisting angle of the second group of fiber bundles 33.

The present disclosure is not limited to the embodiments described above, and combinations of the respective configurations of the embodiments and changes and applications made by those skilled in the art based on the description of the specification and well-known techniques are also intended for the present disclosure and are included in the scope of protection.

As described above, the present specification discloses the following matters.
(1) A filament used as a manufacturing raw material for a 3D printer, in which
   a fiber bundle including a continuous reinforcing fiber is impregnated with a matrix resin,
   the filament includes a first group of fiber bundles and a second group of fiber bundles, and
   a twisting angle of the first group of fiber bundles is smaller than a twisting angle of the second group of fiber bundles.
   According to the filament, the fiber bundle including the continuous reinforcing fiber includes the first group of fiber bundles and the second group of fiber bundles, and the twisting angle of the first group of fiber bundles is smaller than the twisting angle of the second group of fiber bundles. Accordingly, tensile strength and bending rigidity can be improved by the first group of fiber bundles while good flexibility is achieved.
(2) The filament according to (1), in which
   the first group of fiber bundles is disposed along a filament central axis, and
   the second group of fiber bundles is disposed at a radially outer side of the first group of fiber bundles, and is applied with twisting around the first group of fiber bundles.
   According to the filament, the second group of fiber bundles is disposed at the radially outer side of the first group of fiber bundles disposed along the filament central axis, and is applied with the twisting around the first group of fiber bundles. Accordingly, the tensile strength and the bending rigidity can be improved in a well-balanced manner in a radial direction while the good flexibility is achieved.
(3) The filament according to (1) or (2), in which
   an orientation direction of the reinforcing fiber of the first group of fiber bundles is aligned parallel to an axial direction of the filament.
   According to the filament, the tensile strength and the bending rigidity can be improved by the first group of fiber bundles while the good flexibility is achieved.
(4) The filament according to (2), in which
   an outer circumference of the second group of fiber bundles is covered with the matrix resin.
   According to the filament, the outer circumference of the second group of fiber bundles is covered with the matrix resin. Therefore, the tensile strength and the bending rigidity can be improved by the first group of fiber bundles while the good flexibility is achieved, and furthermore, the reinforcing fiber of the second group of fiber bundles provided outside the first group of fiber bundles can be protected by the matrix resin.
(5) The filament according to (4), in which
   the filament has a spiral groove or ridge on an outer circumferential surface along an axial direction of the filament.
   According to the filament, the spiral groove or ridge is formed on the outer circumferential surface along the axial direction of the filament, and thus a surface area of the outer circumferential surface can be increased, and the flexibility can be improved.
(6) The filament according to any one of (1) to (5), in which
   the matrix resin is a thermoplastic resin or a thermosetting resin.
   According to the filament, in the filament containing the matrix resin including the thermoplastic resin or the thermosetting resin, the tensile strength and the bending rigidity can be improved by the first group of fiber bundles while the good flexibility is achieved.
(7) A manufactured object manufacturing method, including:
   thermally melting the filament according to any one of (1) to (6) and ejecting a thermally melted manufacturing material to additively manufacture a manufactured object.

According to the manufactured object manufacturing method, the second group of fiber bundles is twisted at the twisting angle larger than that of the first group of fiber bundles, and thus the flexibility of the second group of fiber bundles is improved. Therefore, when printing a curvature unit, the filament easily follows a curvature, and manufacturing accuracy is improved. The first group of fiber bundles has good fiber fusion because the fiber bundle smoothly spreads and is uniformly distributed during the manufacturing. Furthermore, since the fiber bundle easily spreads, a gap is less likely to be generated between the adjacent filaments in a plan view, and the filaments are easily gathered. Accordingly, a manufactured object having excellent strength properties is obtained.

The present application is based on Japanese Patent Application No. 2022-088614 filed on May 31, 2022, the contents of which are incorporated herein by reference.

### REFERENCE SIGNS LIST

11, 11A, 11B, 11C: filament
13: filament feeding unit
15: head unit
15a: nozzle
17: table
19: molding driving unit
21: control unit
23: reinforcing fiber
25: fiber bundle
27: matrix resin
31: first group of fiber bundles
33: second group of fiber bundles
35: resin
37: groove
41: composite
100: additive manufacturing apparatus (3D printer)
200: filament manufacturing apparatus

## Claims

1. A filament used as a manufacturing raw material for a 3D printer, wherein
a fiber bundle including a continuous reinforcing fiber is impregnated with a matrix resin,
the filament comprises a first group of fiber bundles and a second group of fiber bundles, and
a twisting angle of the first group of fiber bundles is smaller than a twisting angle of the second group of fiber bundles.

2. The filament according to claim 1, wherein
the first group of fiber bundles is disposed along a filament central axis, and
the second group of fiber bundles is disposed at a radially outer side of the first group of fiber bundles, and is applied with twisting around the first group of fiber bundles.

3. The filament according to claim 1, wherein
an orientation direction of the reinforcing fiber of the first group of fiber bundles is aligned parallel to an axial direction of the filament.

4. The filament according to claim 2, wherein
an orientation direction of the reinforcing fiber of the first group of fiber bundles is aligned parallel to an axial direction of the filament.

5. The filament according to claim 2, wherein
an outer circumference of the second group of fiber bundles is covered with the matrix resin.

6. The filament according to claim 5, wherein
the filament has a spiral groove or ridge on an outer circumferential surface along an axial direction of the filament.

7. The filament according to any one of claims 1 to 6, wherein
the matrix resin is a thermoplastic resin or a thermosetting resin.

8. A manufactured object manufacturing method, comprising:
thermally melting the filament according to any one of claims 1 to 6 and ejecting a thermally melted manufacturing material to additively manufacture a manufactured object.

9. A manufactured object manufacturing method, comprising:
thermally melting the filament according to claim 7 and ejecting a thermally melted manufacturing material to additively manufacture a manufactured object.

10. The manufactured object manufacturing method according to claim 8, further comprising:
thermally melting the filament and ejecting the thermally melted manufacturing material to additively manufacture the manufactured object.

11. The manufactured object manufacturing method according to claim 9, further comprising:
thermally melting the filament and ejecting the thermally melted manufacturing material to additively manufacture the manufactured object.
